# EUROPÄISCHE PATENTSCHRIFT

(11) **EP 4 488 543 B1**
(45) Veröffentlichungstag und Bekanntmachung des Hinweises auf die Patenterteilung: **25.02.2026**
(21) Anmeldenummer: 24185747.3
(22) Anmeldetag: 01.07.2024
(51) Int. Cl.: F16F 9/512, F16F 9/516

(54) **SCHWINGUNGSDÄMPFER, SOWIE VERFAHREN ZUM BETRIEB EINES DRUCKBEGRENZUNGSVENTILS IN EINEM SCHWINGUNGSDÄMPFER**
VIBRATION DAMPER, AND METHOD FOR OPERATING A PRESSURE LIMITING VALVE IN A VIBRATION DAMPER
AMORTISSEUR DE VIBRATIONS ET PROCÉDÉ DE FONCTIONNEMENT D'UNE SOUPAPE DE LIMITATION DE PRESSION DANS UN AMORTISSEUR DE VIBRATIONS

(30) Priorität: 04.07.2023 DE 102023117579; 04.07.2023 LU 103165
(43) Veröffentlichungstag der Anmeldung: 08.01.2025
(73) Patentinhaber: thyssenkrupp Bilstein GmbH, 58256 Ennepetal (DE); thyssenkrupp AG, 45143 Essen (DE)
(72) Erfinder: Schmidt, Christoph, 53227 Bonn (DE); Maslowski, Benjamin, 42897 Remscheid (DE); Dr. Wielens, Sven, 45896 Gelsenkirchen (DE)
(74) Vertreter: thyssenkrupp Intellectual Property GmbH

(56) Entgegenhaltungen:
- WO-A1-2019/000720
- DE-A1- 102013 114 169
- US-A1- 2022 412 477
- US-B2- 9 217 484

## Beschreibung

Die vorliegende Erfindung betrifft einen Schwingungsdämpfer gemäß dem Oberbegriff der Anspruchs 1, sowie ein Verfahren zum Betrieb eines Druckbegrenzungsventils in einem Schwingungsdämpfer gemäß Anspruch 12.

Ein Schwingungsdämpfer der vorgenannten Art ist beispielsweise aus der DE 10 2015 107 248 A1 oder der DE 10 2013 114 169 A1 bekannt geworden.

In der DE 10 2013 114 169 A1 wird beispielsweise ein regelbarer Schwingungsdämpfer, insbesondere für ein Fahrzeugfahrwerk, beschrieben, umfassend ein Zylinderrohr, das ein darin abgedichtetes Hydraulikfluid aufweist, einen Kolben, der innerhalb des Zylinderrohres entlang einer Zylinderrohrachse axial bewegbar ist und der das Zylinderrohr in zwei Arbeitsräume unterteilt, eine Kolbenstange, die parallel zur Zylinderrohrachse ausgerichtet ist und an einem Ende mit dem Kolben verbunden ist, wobei im Kolben mehrere Fluiddurchführungen von einem Arbeitsraum in den anderen Arbeitsraum vorgesehen sind, wobei eine erste Ventilbaugruppe zur Dämpfung der Kolbenbewegung in einer ersten Betätigungsrichtung an einer ersten Fluiddurchführung angeordnet ist und wobei eine zweite Ventilbaugruppe zur Dämpfung der Kolbenbewegung in einer zweiten Betätigungsrichtung an einer zweiten Fluiddurchführung angeordnet ist, wobei jede Ventilbaugruppe zumindest eine Ventilscheibe aufweist, die in einer geschlossenen Ventilstellung auf einem Ventilsitz aufsitzt und so die zugehörige Fluiddurchführung abdeckt, und die in einer geöffneten Ventilstellung zumindest teilweise von dem Ventilsitz beabstandet ist, wobei jede Ventilbaugruppe eine Vorsteuerkammer umfasst, wobei durch Druckbeaufschlagung der Vorsteuerkammer die Ventilscheibe in die geschlossene Ventilstellung vorspannbar ist, wobei der Druck in den jeweiligen Vorsteuerkammern einstellbar ist.

Der Vorsteuerdruck in den beiden Vorsteuerkammern kann geregelt werden. Hierzu ist ein Vorsteuerventil vorgesehen, welches einen Ventilkörper aufweist.

Fluid, welches durch das Vorsteuerventil abfließt, fließt bei Betätigung der Kolbenstange in eine erste Richtung (erhöhter Druck in erstem Arbeitsraum) durch einen zweiten Abflussdurchgang zum zweiten Arbeitsraum. In dem zweiten Abflussdurchgang ist auch eine Drossel und ein erstes Einwegeventil angeordnet. Das Einwegeventil verhindert in diesem Fall, dass Fluid aus dem zweiten Arbeitsraum durch das Vorsteuerventil in Richtung der Vorsteuerkammern gelangen kann.

Bei Betätigung der Kolbenstange in entgegengesetzte Richtung (erhöhter Druck in zweitem Arbeitsraum) fließt das durch das Vorsteuerventil abfließende Fluid durch einen ersten Abflussdurchgang zum ersten Arbeitsraum. Das erste Einwegeventil verhindert, dass Fluid aus dem zweiten Arbeitsraum durch das Vorsteuerventil in Richtung der Vorsteuerkammern gelangt. In dem ersten Abflussdurchgang ist ebenfalls ein weiteres Einwegeventil angeordnet.

Die vorgenannten Komponenten sind Teil eines Druckbegrenzungsventils. Insbesondere die Ventilbaugruppen bilden hier ein Hauptstufenventil innerhalb des Druckbegrenzungsventils. Zudem umfasst das Druckbegrenzungsventil das oben genannte Vorsteuerventil, auch Vorstufenventil, und die Einwegeventile, auch Rückschlagventile genannt.

Es ist jedoch festzustellen, dass das hier skizzierte Druckbegrenzungsventil relativ aufwendig aufgebaut ist, insbesondere ein Hauptstufenventil mit einer ersten Ventilbaugruppe und einer zweiten Ventilbaugruppe umfasst. Ferner umfasst das Druckbegrenzungsventil ein Vorsteuerventil und Rückschlagventile (Einwegventile).

Zudem können aus der Kombination des Vorstufen- und ein Hauptstufenventil funktionale Probleme entstehen. Zum einen neigen vorgesteuerte Druckbegrenzungsventile zu einem Kraftüberschwinger beim Öffnen der Hauptstufe. Zum andern können beide Ventile gegeneinander Schwingen, woraus Schwingungen in der Dämpfkraft resultieren.

Hier setzt die vorliegende Erfindung an und macht es sich zur Aufgabe einen verbesserten Schwingungsdämpfer, insbesondere ein verbessertes Druckbegrenzungsventil, vorzuschlagen. Es soll insbesondere ein einfaches und günstiges Druckbegrenzungsventil vorgeschlagen werden, welches zudem ein möglichst schwingungsfreies Öffnungsverhalten ermöglicht. Gleichzeitig soll der Einsatz von Rückschlagventilen zur Sicherstellung der Druckbegrenzungsfunktion vermieden werden um insbesondere konstruktiv den Einfluss von geometrischen Bauteiltoleranzen auf die Dämpfkraft gering zu halten.

Erfindungsgemäß wird die Aufgabe durch einen Schwingungsdämpfer mit den kennzeichnenden Merkmalen des Anspruchs 1 gelöst.

Dadurch, dass
- das Druckbegrenzungsventil einen verschiebbar in einem Hauptkolbenraum aufgenommenen Hauptkolben zum Öffnen oder Verschließen des Druckbegrenzungsventils umfasst, wobei
- das Druckbegrenzungsventil mit einem ersten Öffnungskraftmittel ausgestattet ist, welches dazu eingerichtet ist eine Öffnungskraft auf den Hauptkolben in der ersten Betätigungsrichtung des Kolbens auszuüben, wobei
- das Druckbegrenzungsventil mit einem zweiten Öffnungskraftmittel ausgestattet ist, welches dazu eingerichtet ist eine Öffnungskraft auf den Hauptkolben in der zweiten Betätigungsrichtung des Kolbens auszuüben, wobei
- das zweite Öffnungskraftmittel einen verschiebbar in dem Hauptkolben aufgenommenen Hilfskolben umfasst,
können die oben skizzierten Nachteile überwunden, zumindest aber gemindert werden. Insbesondere kann ein und derselbe Hauptkolben zur Druckbegrenzung sowohl in der ersten Betätigungsrichtung, beispielsweise der Druckstufe, als auch in der zweiten Betätigungsrichtung, beispielsweise der Zugstufe, des Schwingungsdämpfers, eingesetzt werden.

Somit kann das Druckbegrenzungsventil als direktgesteuertes Druckbegrenzungsventil ohne Vorstufe ausgeführt werden. Dies eröffnet beispielsweise die Möglichkeit, dass die von einem Kraftsteller, insbesondere elektromagnetischem Aktuator, erzeugte Kraft, unmittelbar auf den dämpfkrafterzeugenden Hauptkolben einwirken kann. Der Kraftsteller kann eine Schließkraft auf den Hauptkolben ausüben, welche der Öffnungskraft der Öffnungskraftmittel entgegenwirken kann. Da lediglich ein Hauptkolben für die eigentliche Druckbegrenzung benötigt wird, kann der Kraftsteller hier einwirken. Der Öffnungsdruck am dämpfkrafterzeugenden Hauptkolben kann dabei durch ein und denselben Kraftsteller in Zug- und Druckstufe reguliert werden. Je höher die vom Kraftsteller wirkende Kraft auf den Hauptkolben ist, desto höher ist der Öffnungsdruck. Der Öffnungsdruck kann in Zug- und Druckstufe durch jeweils unterschiedliche Wirkflächen, verschieden hoch sein.

Auch eröffnet diese Ausgestaltung die Möglichkeit, dass eine Anströmung des Hauptkolbens, insbesondere einer Steuerkante am dämpfkrafterzeugenden Hauptkolben, von beiden Seiten erfolgen kann. Das bedeutet, dass das Fluid, insbesondere Öl, beim Fluss von dem ersten einem Ringraum in den Kolbenraum (Zugstufe) und umgekehrt vom Kolbenraum in den Ringraum (Druckstufe) denselben Hauptkolben, insbesondere dieselbe Steuerkante am Hauptkolben, in entgegengesetzten Richtungen anströmt. Durch die beidseitige Anströmung des Hauptkolbens, insbesondere der Steuerkante des Hauptkolbens, wird der Einsatz von Rückschlagventilen vermieden.

Es kann optional ein geometrisches Justageelement eingefügt werden, das die wirksamen Flächen in Zug- und Druckstufe korrigiert, falls eine maßliche Abweichung des Steuerkantendurchmessers am Hauptkolben vorliegt.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass der Hauptkolben den Hauptkolbenraum in einen Hauptsteuerraum und einen Vorsteuerraum teilt, wobei das erste Öffnungskraftmittel den Hauptsteuerraum umfasst, der in fluidischer Verbindung mit dem ersten Arbeitsraum steht. Entsprechend kann das Fluid aus dem ersten Arbeitsraum in der Druckstufe in den Hauptsteuerraum einströmen und eine Öffnungskraft auf den Hauptkolben ausüben.

In einer weiteren vorteilhaften Ausgestaltung der Erfindung kann vorgesehen sein, dass das zweite Öffnungskraftmittel einen Hilfskolbenraum (1010) in dem Hauptkolben umfasst, in dem der Hilfskolben verschiebbar aufgenommen ist, wobei der Hilfskolbenraum eine hilfskolbenseitige Fläche des Hilfskolbens und eine hauptkolbenseitige Fläche des Hauptkolbens umfasst, , wobei der Hilfskolbenraum in fluidischer Verbindung mit dem zweiten Arbeitsraum steht. Entsprechend kann das Fluid aus dem zweiten Arbeitsraum in der Zugstufe in den Hilfskolbenraum einströmen und eine Öffnungskraft auf den Hauptkolben ausüben.

In einer weiteren vorteilhaften Ausgestaltung der Erfindung kann vorgesehen sein, dass der Hauptsteuerraum von einem Ringraum umgeben ist, wobei der Ringraum fluidisch mit dem ersten Arbeitsraum und dem Hilfskolbenraum verbunden ist, wobei der fluidische Durchlass zwischen Hauptsteuerraum und Ringraum durch Verschieben des Hauptkolbens zum Öffnen oder Verschließen des Druckbegrenzungsventils wahlweise geöffnet oder geschlossen werden kann. Der Durchlass zwischen Hauptsteuerraum und Ringraum wirkt sowohl in der Druckstufe, als auch in der Zugstufe als verschließbarer oder zu öffnender Durchlass.

In einer weiteren vorteilhaften Ausgestaltung der Erfindung kann vorgesehen sein, dass das Druckbegrenzungsventil mit mindestens einem Schließkraftmittel ausgestattet ist, welches dazu eingerichtet ist, eine Schließkraft zum Schließen des Druckbegrenzungsventils auf den Hauptkolben auszuüben. Während die Öffnungsmittel eine Kraft zum Öffnen des Druckbegrenzungsventils, also zur Bewegung des Hauptkolbens in eine geöffnete Position, bereitstellen, erbringen die Schließkraftmittel eine entgegengesetzte Kraft, sprich eine Schließkraft, die eine Bewegung des Hauptkolbens in eine geöffnete Position bewirken würden. Die jeweilige Position des Hauptkolbens hängt letztendlich davon ab, welche der beiden Kräfte überwiegt.

In einer weiteren vorteilhaften Ausgestaltung der Erfindung kann vorgesehen sein, dass ein Schließkraftmittel einen Kraftsteller, insbesondere magnetischen Aktuator, und/oder eine Federeinrichtung umfasst, der bzw. die dazu eingerichtet ist bzw. sind, den Hauptkolben in Richtung einer geschlossenen Stellung zu drücken. Die von dem Kraftsteller ausgeübte Kraft lässt sich sehr vorteilhaft von außen regeln, beispielsweise über ein entsprechendes elektronisches Steuergerät. Insofern stellt der Kraftsteller eine vorteilhafte Einrichtung dar, mit welcher das Dämpfungsverhalten des Schwingungsdämpfers individuell an Bedürfnisse, beispielsweise bei der Fahrwerksabstimmung, anzupassen.

In einer weiteren vorteilhaften Ausgestaltung der Erfindung kann vorgesehen sein, dass ein Schließkraftmittel den Vorsteuerraum umfasst, wobei der Vorsteuerraum fluidisch mit dem Hauptsteuerraum verbunden ist. Zwischen Vorsteuerraum und Hauptsteuerraum kann entsprechend Fluid ausgetauscht werden, so dass beispielsweise über die jeweils wirksamen Kolbenflächen die zu erwartenden Schließ- bzw. Öffnungskräfte eingestellt werden könnten.

In einer weiteren vorteilhaften Ausgestaltung der Erfindung kann vorgesehen sein, dass ein Schließkraftmittel eine umlaufende Kante des Hauptkolbens umfasst, wobei die umlaufende Kante in den Ringraum hineinragt. Die umlaufende Kante kann ebenfalls zu einer auf den Hauptkolben wirkenden Schließkraft beitragen, so dass beispielsweise durch die Auslegung der Kante Einfluss auf das Verhalten des Schwingungsdämpfers genommen werden kann.

In einer weiteren vorteilhaften Ausgestaltung der Erfindung kann vorgesehen sein, dass der Hauptkolben eine dem Hauptsteuerraum zugewandte Hauptsteuerfläche, sowie eine dem Vorsteuerraum zugewandte Vorsteuerfläche umfasst, wobei die Hauptsteuerfläche vorzugsweise größer als die Vorsteuerfläche ist. Über die Ausgestaltung der vorgenannten Flächen lässt sich die zu erwartende Schließkraft bzw. Öffnungskraft vorteilhaft einstellen.

In einer weiteren vorteilhaften Ausgestaltung der Erfindung kann vorgesehen sein, dass die Hauptsteuerfläche größer als die Vorsteuerfläche ist und/oder dass die Hilfskolbenfläche größer als die Kantenfläche des Hauptkolbens ist. Über die jeweilige Ausgestaltung der Flächengrößen kann der Beitrag der vorgenannten Flächen zur Öffnungs- bzw. Schließkraft vorteilhaft eingestellt werden.

Eine weitere Aufgabe der vorliegenden Erfindung liegt darin, ein vorteilhaftes Verfahren zum Betrieb eines Druckbegrenzungsventils in einem erfindungsgemäßen Schwingungsdämpfer anzugeben.

Gelöst wird diese Aufgabe durch das Verfahren gemäß Anspruch 12, insbesondere folgende Verfahrensschritte:
- In einer ersten Betätigungsrichtung des Kolbens wird das erste Öffnungskraftmittel mit Fluid aus dem ersten Arbeitsraum beaufschlagt, so dass der Hauptkolben in eine Öffnungsposition verschoben wird und Fluid von dem ersten Arbeitsraum in den zweiten Arbeitsraum strömt;
- In einer zweiten Betätigungsrichtung des Kolbens wird das zweite Öffnungskraftmittel mit Fluid aus dem zweiten Arbeitsraum beaufschlagt, so dass der Hauptkolben in eine Öffnungsposition verschoben wird und Fluid von dem zweiten Arbeitsraum in den ersten Arbeitsraum strömt.

Es ist ersichtlich, dass in beiden Fällen, also sowohl der Zugrichtung, als auch der Druckrichtung, der Hauptkolben für die Druckbegrenzung zum Einsatz kommt. Es kann demnach grundsätzlich sowohl auf ein Vorsteuerventil und Einwegeventile verzichtet werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass das Fluid sowohl bei der ersten Betätigungsrichtung des Kolbens, als auch bei der zweiten Betätigungsrichtung des Kolbens den Hauptsteuerraum passiert. Mit anderen Worten, das Fluid zwischen den Arbeitsräumen wird regelmäßig über den Hauptsteuerraum ausgetauscht, so dass der hierin aufgenommene Hauptkolben das maßgebliche Mittel zur Druckbegrenzung ist.

In einer weiteren vorteilhaften Ausgestaltung der Erfindung kann vorgesehen sein, dass das Fluid bei der ersten Betätigungsrichtung in den Hauptsteuerraum einströmt und den Hauptkolben von dem Hauptsteuerraumboden wegdrückt, insbesondere in eine geöffnete Position des Hauptkolbens. In einer weiteren vorteilhaften Ausgestaltung der Erfindung kann vorgesehen sein, dass das Fluid bei der zweiten Betätigungsrichtung in den Hilfskolbenraum einströmt und den Hauptkolben durch Druck auf die hauptkolbenseitige Fläche von dem Hilfskolben wegdrückt, insbesondere in eine geöffnete Position des Hauptkolbens. Es ist erkennbar, dass in beiden Fällen der Hauptkolben in dieselbe Richtung zum Öffnen verschoben wird. In einem Fall durch den Druck in dem Hauptsteuerraum und im anderen Fall durch den Druck in dem Hilfskolbenraum.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: einen Ausschnitt eines Schwingungsdämpfers gemäß dem Stand der Technik;
- Fig. 2: ein erfindungsgemäßer Schwingungsdämpfer in einer geschnittenen Ansicht;
- Fig. 3: ein Detail eines erfindungsgemäßen Schwingungsdämpfers in einer geschnittenen Ansicht, insbesondere Kolben mit Druckbegrenzungsventil;
- Fig. 4: ein Detail eines erfindungsgemäßen Schwingungsdämpfers in einer geschnittenen Ansicht, insbesondere Druckstufe;
- Fig. 5: ein Detail eines erfindungsgemäßen Schwingungsdämpfers in einer geschnittenen Ansicht, insbesondere Zugstufe;
- Fig. 6: ein Detail einer weiteren Ausführungsform eines erfindungsgemäßen Schwingungsdämpfers;
- Fig. 7: ein Detail einer weiteren Ausführungsform (Fig. 6) eines erfindungsgemäßen Schwingungsdämpfers in einer geschnittenen Ansicht, insbesondere Druckstufe;
- Fig. 8: ein Detail einer weiteren Ausführungsform (Fig. 6) eines erfindungsgemäßen Schwingungsdämpfers in einer geschnittenen Ansicht, insbesondere Zugstufe.

Folgende Bezugszeichen werden in den Abbildungen verwendet:
- 1: Schwingungsdämpfer
- 2: Kolben
- 3: Kolbenstange
- 4: Boden
- 5: zylindrische Seitenwand
- 6: formstabiler bewegbarer Deckel
- 9: Verbindungsdurchführung zwischen den beiden Vorsteuerkammern
- 10: Zylinderrohr
- 11: erster Arbeitsraum
- 12: erste Fluiddurchführung
- 13: erste Ventilbaugruppe
- 14: erste Ventilscheibe
- 15: erster Ventilsitz
- 16: erste Vorsteuerkammer
- 17: Verbindungsdurchführung zwischen zweitem Arbeitsraum 21 und erster Vorsteuerkammer 16
- 20: Einwegeventil
- 21: zweiter Arbeitsraum
- 22: zweite Fluiddurchführung
- 23: zweite Ventilbaugruppe
- 24: zweite Ventilscheibe
- 25: zweiter Ventilsitz
- 26: zweite Vorsteuerkammer
- 27: Fluiddurchführung zwischen erstem Arbeitsraum 11 und zweiter Vorsteuerkammer 26
- 28: Ringdichtung
- 29: Mutter
- 30: Rückstellfeder
- 31: Vorsteuerventil
- 32: Ventilkörper
- 33: Ventilsitz
- 34: zweiter Abflussdurchgang zum zweiten Arbeitsraum
- 35: Drossel
- 36: Einwegeventil
- 37: Ringkanal
- 38: erster Abflussdurchgang zum ersten Arbeitsraum
- 39: Einwegeventil
- 40: magnetischer Aktuator
- 41: Hülse
- 42: Befestigungszapfen

- A: Zylinderrohrachse
- R(1,2): Betätigungsrichtung
- P1: Fluidflussrichtung
- P2: Fluidflussrichtung
- P_{hoch}: hoher Druck
- P_{nieder}: niedriger Druck

- 100: Druckbegrenzungsventil
- 101: Kraftsteller
- 102: Federeinrichtung
- 103: Vorsteuerraum
- 104: Ringraum
- 105: Raum
- 106: Hauptsteuerraum
- 107: Kanal (11/106)
- 108: Kanal (106/103)
- 109: Kanal (104/21)
- 110: Kanal (104/1010)
- 111: Kanal (103/105)
- 112: Bypass
- 113: Ventilscheibe
- 114: Vorspannelement

- 1001: Hauptkolben
- 1002: Hauptkolbenraum
- 1003: Hauptkolbenstange
- 1004: Vorsteuerfläche
- 1005: umlaufende Kante
- 1006: - frei -
- 1007: Hauptsteuerfläche
- 1008: Hauptsteuerraumboden
- 1009: Hilfskolben
- 1010: Hilfskolbenraum
- 1011: Stempel
- 1012: Hilfskolbenfläche
- 1013: hauptkolbenseitige Fläche des Hilfskolbenraumes

- 1121: Einlass
- 1122: Rückschlagventil
- 1123: Bypassscheibe
- 1124: Ringnut
- 1125: Auslass

- 1131: Öffnung

Dabei gelten Merkmale und Details, die im Zusammenhang mit einem Verfahren beschrieben sind selbstverständlich auch im Zusammenhang mit der erfindungsgemäßen Vorrichtung und umgekehrt, sodass bezüglich der Offenbarung zu den einzelnen Erfindungsaspekten stets wechselseitig Bezug genommen wird bzw. werden kann. Außerdem kann ein ggf. beschriebenes erfindungsgemäßes Verfahren mit der erfindungsgemäßen Vorrichtung durchgeführt werden.

Die hierin verwendete Terminologie dient nur zum Zweck des Beschreibens bestimmter Ausführungsformen und soll die Offenbarung nicht beschränken. Wie hierin verwendet, sollen die Singularformen "ein/eine" und "der/die/das" auch die Pluralformen enthalten, sofern der Kontext dies nicht anderweitig klar erkennen lässt. Es wird zudem klar sein, dass die Ausdrücke "weist auf" und/oder "aufweisend", wenn in dieser Beschreibung verwendet, das Vorhandensein der genannten Merkmale, ganzen Zahlen, Schritte, Operationen, Elemente und/oder Bauteile spezifizieren, aber nicht das Vorhandensein oder den Zusatz von einem/einer oder mehreren anderen Merkmalen, ganzen Zahlen, Schritten, Operationen, Elementen, Bauteilen und/oder Gruppen derselben ausschließen. Wie hierin verwendet, enthält der Ausdruck "und/oder" jedes beliebige und alle Kombinationen von einem oder mehreren der assoziierten, aufgelisteten Elemente.

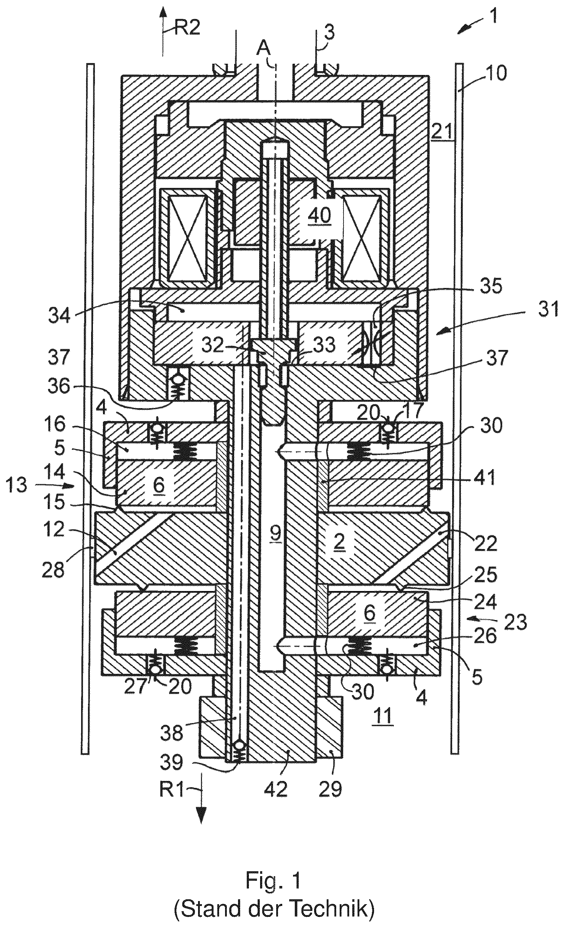

Zunächst wird auf Fig. 1 Bezug genommen. Fig. 1 zeigt den Ausschnitt eines Schwingungsdämpfers 1 gemäß dem Stand der Technik, insbesondere gemäß der DE 10 2013 114 169 A1, im Querschnitt.

Der Schwingungsdämpfer 1 umfasst ein Zylinderrohr 10, in dem ein Kolben 2 entlang einer Zylinderrohrachse A verschiebbar gehalten ist. Der Kolben 2 weist an seinem Außenumfang eine Ringdichtung 28 auf, so dass der Kolben 2 das Zylinderrohr 10 in einen ersten Arbeitsraum 11 und in einen zweiten Arbeitsraum 21 abdichtend unterteilt. Der Kolben 2 ist an einem Befestigungszapfen 42 befestigt, der wiederum fest mit einer Kolbenstange 3 verbunden ist. Bei Betätigung der Kolbenstange 3 in einer ersten Betätigungsrichtung R1 hin zum ersten Arbeitsraum 11 erhöht sich der Druck im ersten Arbeitsraum 11. Fluid, welches im ersten Arbeitsraum 11 vorhanden ist, wird dann durch eine erste Fluiddurchführung 12 im Kolben 2 in den zweiten Arbeitsraum 21 gefördert.

Bei der Förderung des Fluids durch die erste Fluiddurchführung 12 fließt das Fluid durch eine erste Ventilbaugruppe 13 mit einer Ventilscheibe 14. Bei Erreichen eines Mindestdrucks des Fluids in dem ersten Arbeitsraum wird die erste Ventilscheibe 14, welche mit Vorspannung auf einem ersten Ventilsitz 15 aufsitzt, von dem ersten Ventilsitz 15 zumindest teilweise gelöst. So wird die Ventilscheibe von der geschlossenen Stellung in die geöffnete Stellung überführt.

Eine hydraulische Verbindung wird so zwischen dem ersten Arbeitsraum 12 und dem zweiten Arbeitsraum 21 hergestellt. Dabei wirkt die erste Ventilscheibe 14 im Zusammenspiel mit dem ersten Ventilsitz 15 als Drossel, wodurch das Fluid abgebremst wird. Dies führt zu einer Dämpfung der Kolbenbewegung.

Im vorliegenden Ausführungsbeispiel gemäß Fig. 1 ist die Ventilscheibe 14 durch einen formstabilen Deckel 6 einer ersten Vorsteuerkammer 16 gebildet. Der formstabile Deckel 6 ist axial beweglich gegenüber dem Befestigungszapfen 42 angeordnet und wird durch einen in der Vorsteuerkammer 16 herrschenden Vorsteuerdruck in Richtung des Ventilsitzes 15 beaufschlagt. Dieser Vorsteuerdruck in der ersten Vorsteuerkammer 16 kann während des Betriebs definiert eingestellt werden. Die erste Vorsteuerkammer 16 wird ferner gebildet durch einen Boden 4, der fest mit dem Befestigungszapfen 42 verbunden ist. Seitlich wird die erste Vorsteuerkammer 16 durch eine zylindrische Seitenwand 5 begrenzt. Im Zentrum bildet der Befestigungszapfen 42 bzw. Hülsen 41, die um den Befestigungszapfen 42 herum gebildet sind, eine innenzylindrische Wandung koaxial zur Zylinderrohrachse A. Anstelle einer Hülse kann auch eine Innenwand vorgesehen sein, die fest mit dem Boden 4 ausgebildet ist.

Die erste Vorsteuerkammer 16 bildet somit einen Ringraum, der koaxial um den Befestigungszapfen 42 herum angeordnet ist. Durch eine Rückstellfeder 30 wird der Deckel 6 in Richtung auf den Ventilsitz 15 beaufschlagt. Es ist ersichtlich, dass die Dämpfungskraft, die durch die erste Ventilbaugruppe 13 bereitgestellt wird, umso höher ist, je höher der Druck (im folgenden Vorsteuerdruck) in der ersten Vorsteuerkammer 16 ist.

Der Schwingungsdämpfer 1 umfasst ferner eine zweite Ventilbaugruppe 23, die identisch ausgestaltet ist zur ersten Ventilbaugruppe 13. Die zweite Ventilbaugruppe ist dafür vorgesehen die Strömung des Fluids abzubremsen, wenn der Kolben 2 in einer zweiten Betätigungsrichtung R2 bewegt wird. In diesem Fall strömt das Fluid von dem zweiten Arbeitsraum 21 über eine zweite Fluiddurchführung 22 in den ersten Arbeitsraum 11. Eine zweite Vorsteuerkammer 26 wird gleichermaßen durch einen Boden 4, eine zylindrische Seitenwand 5 und einen formstabilen axial bewegbaren Deckel 6 gebildet. Eine zweite Ventilscheibe 24 und ein zweiter Ventilsitz 25 sind denen der ersten Ventilbaugruppe 13 vergleichbar ausgebildet.

Die beiden Vorsteuerkammern 16, 26 sind miteinander hydraulisch über eine Verbingungsdurchführung 9 verbunden. Die Verbindungsdurchführung 9 umfasst eine axiale Bohrung in dem Befestigungszapfen 42 sowie zwei radiale Verbindungsbohrungen in dem Befestigungszapfen 42, jeweils zwischen der axialen Bohrung und den Vorsteuerkammern 16, 26. Im Wesentlichen herrscht in beiden Vorsteuerkammern 16, 26 stets derselbe Druck. Wenn nun der Kolben 2 in der ersten Betätigungsrichtung R1 bewegt wird, so strömt durch eine Fluiddurchführung 27 zwischen dem ersten Arbeitsraum 11 und der zweiten Vorsteuerkammer 26 Fluid aus dem ersten Arbeitsraum 11 in die zweite Vorsteuerkammer 26, wodurch der Vorsteuerdruck in der zweiten Vorsteuerkammer 26 erhöht wird. Durch die Verbingungsdurchführung 9 hindurch pflanzt sich der in der zweiten Vorsteuerkammer 26 aufgebaute Vorsteuerdruck auch in die erste Vorsteuerkammer 16 fort. Dadurch wird der Vorsteuerdruck in der ersten Vorsteuerkammer 16 erzeugt, mit dem das Dämpfungsverhalten der ersten Ventilbaugruppe 13 beeinflusst wird. Gleiches gilt für die Betätigung in der zweiten Betätigungsrichtung R2. In diesem Fall wird Fluid von dem zweiten Arbeitsraum 21 durch eine Fluiddurchführung 17 zwischen dem zweiten Arbeitsraum 21 und der ersten Vorsteuerkammer 16 in die erste Vorsteuerkammer 16 gefördert. Der Vorsteuerdruck, der so in der ersten Vorsteuerkammer 16 erzeugt wird, pflanzt sich wiederum durch die Verbingungsdurchführung 9 in die zweite Vorsteuerkammer 26 fort. Damit das Fluid durch die Fluiddurchführungen 17, 27 nicht in von der ersten Vorsteuerkammer 16 direkt in den zweiten Arbeitsraum 21 bzw. von der zweiten Arbeitkammer 26 in den ersten Arbeitsraum 11 strömen kann, sind in den Fluiddurchführungen 17, 27 jeweils ein Einwegeventil 20 angebracht.

Der Vorsteuerdruck in den beiden Vorsteuerkammern 16 und 26 kann geregelt werden. Hierzu ist ein Vorsteuerventil 31 vorgesehen, welches einen Ventilkörper 32 aufweist. Der Ventilkörper ist beweglich entlang der Zylinderrohrachse A gehalten und kann auf einem feststehenden (bezogen auf den Befestigungszapfen) Ventilsitz 33 aufsitzen. Wenn der Ventilkörper 32 auf dem Ventilsitz 33 aufsitzt, ist ein Abfließen von Fluid durch das Vorsteuerventil 31 weitgehend verhindert. Während einer solchen Phase kann der Vorsteuerdruck aufgebaut oder gehalten werden. Ist der Ventilkörper 32 von dem Ventilsitz 33 gelöst, so kann durch das Vorsteuerventil 31 Fluid aus der Verbindungsdurchführung abfließen; in dieser Phase kann der Vorsteuerdruck reduziert werden. Der Ventilkörper 32 wird dabei mittels eines magnetischen Aktuators 40 in die erste Betätigungsrichtung R1 beaufschlagt. In die zweite Betätigungsrichtung R2 wird der Ventilkörper 32 durch den Vorsteuerdruck beaufschlagt. Je nach den Kräfteverhältnissen, bedingt durch den magnetischen Aktuator 40 und den Vorsteuerdruck, ergibt sich dann die Stellung des Ventilkörpers 32 gegenüber dem Ventilsitz 33.

Das Fluid, welches durch das Vorsteuerventil 31 abfließt, fließt bei Betätigung der Kolbenstange in Richtung R1 (erhöhter Druck in erstem Arbeitsraum 11) durch einen zweiten Abflussdurchgang 34 zum zweiten Arbeitsraum 21. In dem zweiten Abflussdurchgang 34 ist auch eine Drossel 35 und ein Einwegeventil 36 angeordnet. Ein Einwegeventil 36 verhindert in diesem Fall, dass Fluid aus dem zweiten Arbeitsraum 21 durch das Vorsteuerventil 31 in Richtung der Vorsteuerkammern 16, 26 gelangen kann. Die Drossel 35 und das Einwegeventil 36 sind in unterschiedlichen Umfangspositionen angeordnet und über einen Ringkanal 37 miteinander hydraulisch verbunden.

Bei Betätigung der Kolbenstange 3 in Richtung R2 (erhöhter Druck in zweitem Arbeitsraum 21) fließt das durch das Vorsteuerventil 31 abfließende Fluid durch einen ersten Abflussdurchgang 38 zum ersten Arbeitsraum 11. Der erste Abflussdurchgang 38 ist durch eine axiale Bohrung in im Befestigungszapfen 42 gebildet. Das Einwegeventil 36 verhindert, dass Fluid aus dem zweiten Arbeitsraum 21 durch das Vorsteuerventil 31 in Richtung der Vorsteuerkammern 16, 26 gelangt. Der erste Abflussdurchgang 38 ist durch eine weitere axiale Bohrung in dem Befestigungszapfen 42 gebildet. In dem ersten Abflussdurchgang 38 ist das Einwegeventil 39 angeordnet.

Der in der Fig. 1 beschriebene Schwingungsdämpfer entspricht einem Ausführungsbeispiel, wie es in der DE 10 2013 114 169 A1 beschrieben ist. Für die nachfolgende Beschreibung des erfindungsgemäßen Schwingungsdämpfers ist zunächst festzuhalten, dass der vorgenannte Schwingungsdämpfer ein Hauptventil, umfassend im Wesentlichen die erste Ventilbaugruppe 13 und die zweite Ventilbaugruppe 23, umfasst. Ferner umfasst der vorgenannte Schwingungsdämpfer ein Vorsteuerventil 31. Es ist ferner festzuhalten, dass der Schwingungsdämpfer gemäß dem Stand der Technik, insbesondere das Vorsteuerventil 31, mit jeweils zugeordneten Einwegeventilen 36 und 39 ausgestattet ist.

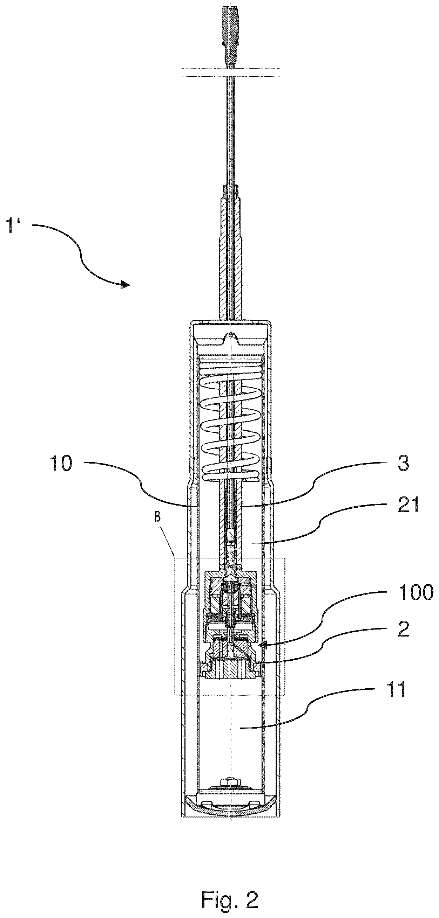

Nachfolgend wird auf die Figuren 2 bis 4 Bezug genommen, die einen erfindungsgemäßen Schwingungsdämpfer bzw. Detaildarstellungen eines erfindungsgemäßen Schwingungsdämpfers skizzieren. Hierbei werden einige Bezugszeichen für Komponenten des Schwingungsdämpfers gemäß dem Stand der Technik verwendet, die vergleichbare Funktionen aufweisen.

In der Fig. 2 ist ein erfindungsgemäßer Schwingungsdämpfer 1' in einer seitlichen Schnittdarstellung abgebildet. Im Wesentlichen umfasst auch der erfindungsgemäße Schwingungsdämpfer 1' ein mit Fluid befülltes Zylinderrohr 10, in dem ein Kolben 2 entlang einer Zylinderrohrachse A verschiebbar gehalten ist, insbesondere axial in eine erste Betätigungsrichtung und eine entgegengesetzte zweite Betätigungsrichtung bewegbar ist. Der Kolben 2 unterteilt das Zylinderrohr 10 in einen ersten Arbeitsraum 11 und in einen zweiten Arbeitsraum 21. Es ist ein von dem Fluid durchströmbares Druckbegrenzungsventil 100 zur Dämpfung der Kolbenbewegung vorgesehen. Der Kolben 2 ist mit einer Kolbenstange 3 verbunden.

Erfindungsgemäß ist vorgesehen, dass das Druckbegrenzungsventil 100 einen verschiebbar in einem Hauptkolbenraum 1002 aufgenommenen Hauptkolben 1001 zum Öffnen oder Verschließen des Druckbegrenzungsventils 100 umfasst, wobei das Druckbegrenzungsventil 100 mit einem ersten Öffnungskraftmittel ausgestattet ist, welches dazu eingerichtet ist eine Öffnungskraft auf den Hauptkolben 1001 in der ersten Betätigungsrichtung des Kolbens 2 auszuüben, wobei das Druckbegrenzungsventil mit einem zweiten Öffnungskraftmittel ausgestattet ist, welches dazu eingerichtet ist eine Öffnungskraft auf den Hauptkolben 1001 in der zweiten Betätigungsrichtung des Kolbens 2 auszuüben, wobei das zweite Öffnungskraftmittel einen verschiebbar in dem Hauptkolben 1001 aufgenommenen Hilfskolben 1009 umfasst.

Bei Betätigung der Kolbenstange 3 in der ersten Betätigungsrichtung R1 hin zum ersten Arbeitsraum 11 erhöht sich der Druck im ersten Arbeitsraum 11. Fluid, welches im ersten Arbeitsraum 11 vorhanden ist, wird dann durch das Druckbegrenzungsventil in den zweiten Arbeitsraum 21 gefördert.

Bei Betätigung der Kolbenstange 3 in einer zweiten Betätigungsrichtung R2 hin zum zweiten Arbeitsraum 21 erhöht sich der Druck im zweiten Arbeitsraum 21. Fluid, welches im zweiten Arbeitsraum 21 vorhanden ist, wird dann durch das Druckbegrenzungsventil in den ersten Arbeitsraum 11 gefördert.

Wie bereits oben angesprochen ist das Druckbegrenzungsventil mit Öffnungskraftmitteln ausgestattet, die eine Öffnungskraft auf den Hauptkolben 1001 ausüben können. Es sind ferner auch Schließkraftmittel, sowie weitere Komponenten vorgesehen, die nachfolgend erläutert werden sollen. Die Schließkraftmittel üben eine Schließkraft auf den Hauptkolben 1001 aus.

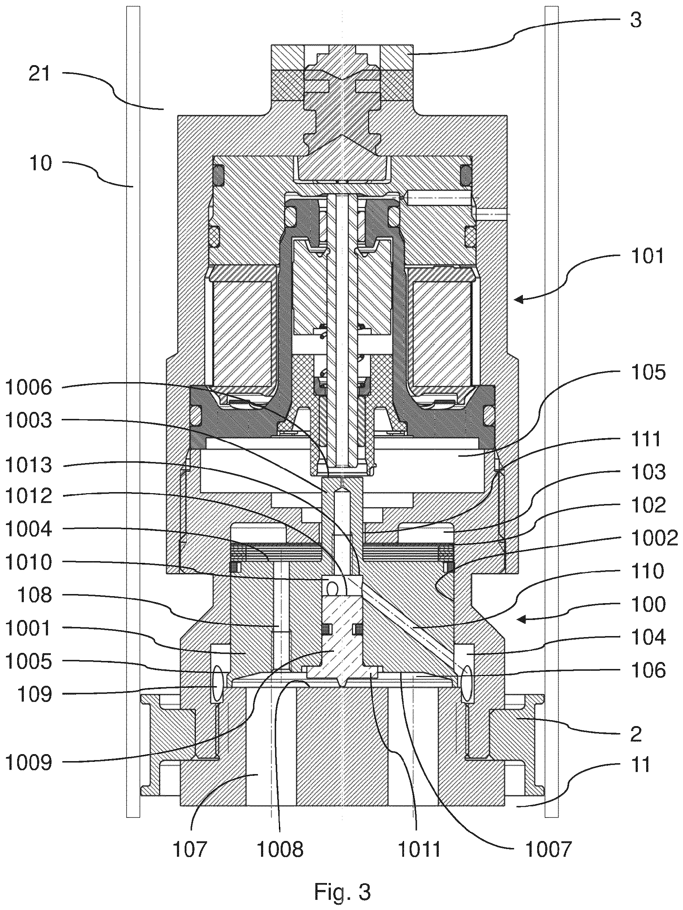

Nachfolgend wird auf Fig. 3 Bezug genommen.

Das Druckbegrenzungsventil 100 umfasst im Wesentlichen den Hauptkolben 1001 der verschiebbar in einem Hauptkolbenraum 1002 aufgenommen ist. Je nach Stellung des Hauptkolbens 1001 kann eine fluidische Verbindung zwischen dem ersten Arbeitsraum 11 und dem zweiten Arbeitsraum 21 ermöglicht oder unterbunden, zumindest aber gedrosselt, werden. Der Einfachheit halber soll von einer Schließstellung oder einer Öffnungsstellung des Hauptkolbens 1001 gesprochen werden, was letztendlich gleichbedeutend mit einem geschlossenen oder geöffneten Zustand des Druckbegrenzungsventils 100 ist.

Die Stellung des Hauptkolbens 1001 und damit der Schließ- bzw. Öffnungszustand des Druckbegrenzungsventils 100 wird von verschiedenen Elementen beeinflusst.

Hier ist zunächst ein Kraftsteller 101, insbesondere ein elektromagnetischer Aktuator, vorgesehen, welcher dazu eingerichtet ist, den Hauptkolben 100 in eine geschlossene Stellung zu drücken, demnach eine Schließkraft auf den Hauptkolben 100 auszuüben. Hierzu ist der Hauptkolben 1001 vorzugsweise mit einer Hauptkolbenstange 1003 ausgestattet, auf welche der Kraftsteller 101 eine Kraft ausüben kann. Der Kraftsteller 101 zählt demnach zu den Schließkraftmitteln.

Ferner ist eine Federeinrichtung 102 vorgesehen, welche dazu eingerichtet ist, den Hauptkolben 1001 in eine geschlossene Stellung zu drücken, demnach eine Schließkraft auf den Hauptkolben 100 auszuüben. Die Federeinrichtung 102 zählt demnach zu den Schließkraftmitteln.

Es ist ferner ein Vorsteuerraum 103 vorgesehen. Der Vorsteuerraum 103 wird abschnittweise von einer dem Vorsteuerraum 103 zugewandten Fläche des Hauptkolbens 1001 gebildet. Zur besseren Unterscheidung soll hier von einer Vorsteuerfläche 1004 des Hauptkolbens 1001 geredet werden. Ein Druck im Vorsteuerraum 103 drückt den Hauptkolben 1001 in eine geschlossene Stellung. Es wird demnach eine Schließkraft auf den Hauptkolben 1001 ausgeübt. Der Vorsteuerraum 103 zählt demnach zu den Schließkraftmitteln.

Es ist ferner ein Ringraum 104 vorgesehen, welcher den Hauptkolben 1001 umschließt. Der Hauptkolben 1001 weist in diesem Ringraum 104 eine umlaufende Kante 1005, insbesondere angeschrägte Kante, auf. Die in Verschiebrichtung wirksame Fläche der Kante 1005 soll nachfolgend als Kantenfläche bezeichnet werden. Ein Druck in dem Ringraum 104 drückt den Hauptkolben 1001 in eine geschlossene Stellung. Es wird demnach eine Schließkraft auf den Hauptkolben 1001 ausgeübt. Die umlaufende Kante 1005 zählt demnach zu den Schließkraftmitteln in Zugrichtung.

Es ist ferner ein Hauptsteuerraum 106 vorgesehen. Der Hauptsteuerraum 106 wird abschnittweise von einer dem Hauptsteuerraum zugewandten Fläche des Hauptkolbens 1001 gebildet. Zur besseren Unterscheidung soll hier von einer Hauptsteuerfläche 1007 des Hauptkolbens 1001 geredet werden. Der Hauptsteuerfläche 1007 steht ein Hauptsteuerraumboden 1008 des Hauptsteuerraums 106 gegenüber. Ein Druck im Hauptsteuerraum 106 drückt den Hauptkolben 1001 in eine geöffnete Stellung. Es wird demnach eine Öffnungskraft auf den Hauptkolben 1001 ausgeübt. Das erste Öffnungskraftmittel umfasst den Hauptsteuerraum 106. Ein unter Druck stehendes Fluid in dem Hauptsteuerraum 106 kann auf die Hauptsteuerfläche 1007 des Hauptkolbens 1001 wirken und den Hauptkolben in eine geöffnete Stellung bewegen.

Es ist ferner ein Hilfskolben 1009 vorgesehen. Der Hilfskolben 1009 ist in einem Hilfskolbenraum 1010 verschiebbar aufgenommen und weist eine dem Hilfskolbenraum 101 zugewandte Hilfskolbenfläche 1012 auf. Hilfskolben 1009 und Hilfskolbenraum 1010 sind in dem Hauptkolben 1001 angeordnet. Der Hilfskolben 1009 weist einen Stempel 1011 auf, der Teil der Hauptsteuerfläche 1007 des Hauptkolbens 1001 ist. Die Hauptsteuerfläche 1007 wird demnach aus der Stempelfläche und der sie umgebenden Fläche des Hauptkolbens gebildet. Ein Druck in dem Hilfskolbenraum 1010, insbesondere auf eine hauptkolbenseitige Fläche 1013 die einen Teil des Hilfskolbenraums 1010 bildet, drückt den Hauptkolben 1001 in eine geöffnete Stellung. Es wird demnach eine Öffnungskraft auf den Hauptkolben 1001 ausgeübt. Das zweite Öffnungskraftmittel umfasst demnach insbesondere den Hilfskolbenraum 1010 und den Hilfskolben 1009 bzw. die hilfskolbenseitige Fläche 1012 und die hauptkolbenseitige Fläche 1013. Ein unter Druck stehendes Fluid in dem Hilfskolbenraum 1010 kann auf die hauptkolbenseitige Fläche 1013 des Hauptkolbens 1001 wirken und den Hauptkolben 1001 in eine geöffnete Stellung bewegen, insbesondere von dem Hilfskolben 1009 wegdrücken. Die Verschiebrichtungen von Hauptkolben 1001 und Hilfskolben 1009 sind in diesem Falle entgegengesetzt.

Es bestehen zudem einige fluidische Verbindungen, die nachfolgend näher erläutert werden sollen.

Es ist vorgesehen, dass der erste Arbeitsraum 11 in fluidischer Verbindung mit dem Hauptsteuerraum 106 steht. Hierzu ist insbesondere ein Kanal 107 vorgesehen.

Es ist vorgesehen, dass der Hauptsteuerraum 106 und der Vorsteuerraum 103 in fluidischer Verbindung stehen. Hierzu ist insbesondere ein Kanal 108 in dem Hauptkolben vorgesehen.

Es ist vorgesehen, dass der Ringraum 104 und der zweite Arbeitsraum 21 in fluidischer Verbindung stehen. Hierzu ist insbesondere ein Kanal 109 vorgesehen.

Es ist vorgesehen, dass der Ringraum 104 und der Hilfskolbenraum 1010 in fluidischer Verbindung stehen. Hierzu ist insbesondere ein Kanal 110 vorgesehen.

Es ist vorgesehen, dass der Vorsteuerraum 103 und der Raum 105 in fluidischer Verbindung stehen. Hierzu ist insbesondere ein Kanal 111 vorgesehen.

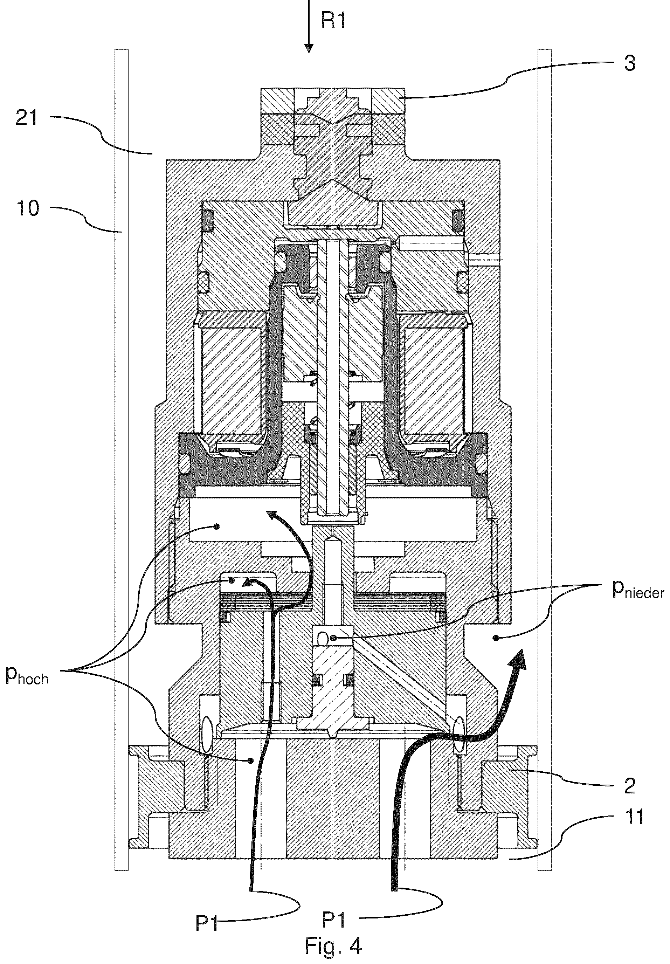

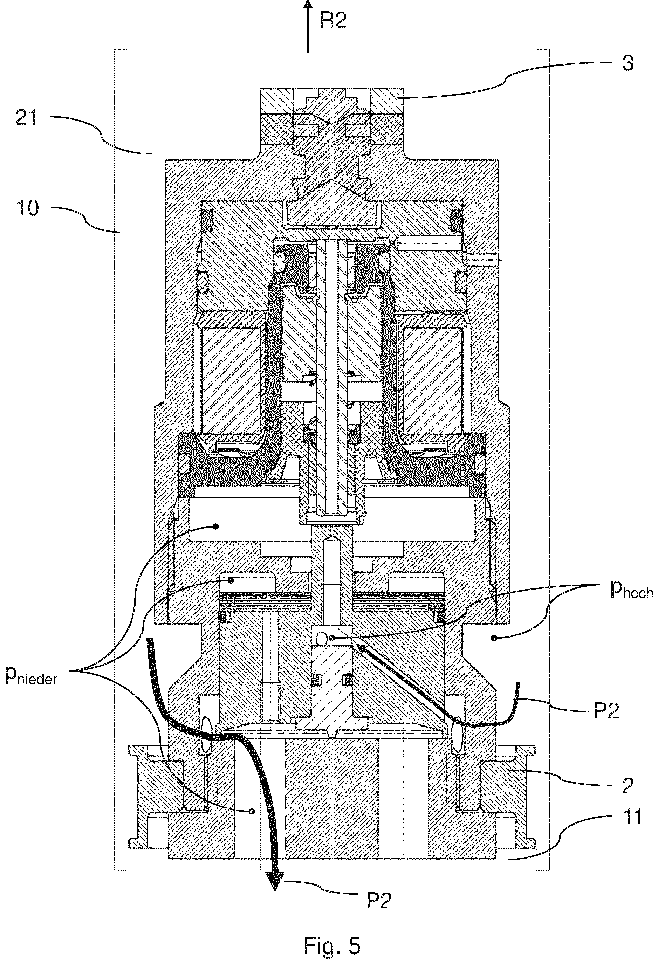

Weitere Details der vorgeschlagenen Erfindung ergeben sich insbesondere aus einer Beschreibung der Funktion des Schwingungsdämpfers, insbesondere des Druckbegrenzungsventils 100, bei einer Druckstufe (vgl. insbesondere Fig. 4) und einer Zugstufe (vgl. insbesondere Fig. 5). Die Druckstufe entspricht einer Bewegung der Kolbenstange 3 bzw. des Kolbens 2 in eine Betätigungsrichtung R1. Die Zugstufe entspricht einer Bewegung der Kolbenstange 3 bzw. des Kolbens 2 in eine Betätigungsrichtung R2.

In einem geschlossenen Zustand des Druckbegrenzungsventils 100 steht der Hauptkolben 1001 dichtend auf dem Hauptventilboden 1008 auf. Hierzu kann eine separate umlaufende Ventillippe an dem Hauptkolben 1001 vorgesehen sein, die auf dem Hauptventilboden 1008 aufliegt. Es findet entsprechend keine Fluidströmung zwischen dem ersten Arbeitsraum 11 und dem zweiten Arbeitsraum 12 über das Druckbegrenzungsventil 100 statt. Eine Öffnung des Druckbegrenzungsventils 100 findet statt, wenn die auf den Hauptkolben 1001 wirkende Öffnungskraft größer als die auf den Hauptkolben 1001 wirkende Schließkraft ist.

Nachfolgend wird auf Fig. 4 Bezug genommen.

Der Kolben 2 wird in die erste Betätigungsrichtung R1 innerhalb des Zylinderrohres 10 bewegt. Fluid aus dem ersten Arbeitsraum 11 strömt durch das geöffnete Druckbegrenzungsventil 100 in den zweiten Arbeitsraum 21, insbesondere von dem ersten Arbeitsraum 11 über den Kanal 107 in den Hauptsteuerraum 106 und von dem Hauptsteuerraum 106 in den Ringraum 104 und über den Kanal 109 von dem Ringraum 104 in den zweiten Arbeitsraum 21. Der Weg des Fluids ist über den Pfeil P1 angedeutet.

Dabei herrscht während der Kolbenverschiebung im ersten Arbeitsraum ein höherer Druck, als in dem zweiten Arbeitsraum. Durch die Bezugszeichen p_{hoch} bzw. p_{nieder} soll dieser Druckunterschied angedeutet werden, wobei unterschiedliche Drücke auch noch in anderen oben bereits genannten Räumen während dieser Bewegung herrschen bzw. Fluid aus dem ersten Arbeitsraum 11 ebenfalls in weitere Räume fließt.

Es strömt Fluid aus dem ersten Arbeitsraum 11 in den Hauptsteuerraum 106, insbesondere über den Kanal 107.

Zwischen dem Hauptsteuerraum 106 und dem Vorsteuerraum 103 kann eine Übertragung des Drucks stattfinden, insbesondere über den Kanal 108.

Zwischen dem Vorsteuerraum 103 und dem Raum 105 kann eine Übertragung des Drucks stattfinden, insbesondere über den Kanal 111.

Es stellt sich ein hoher Druck in dem Vorsteuerraum 103 und dem Raum 105 ein.

Das Fluid strömt von dem Ringraum 104 in den Hilfskolbenraum 1010. Es herrscht ein niedriger Druck in dem Hilfskolbenraum 1010.

Die auf den Hauptkolben 1001 wirkende Schließkraft setzt sich in diesem Fall insbesondere zusammen aus dem
- Druck auf die Vorsteuerfläche 1004 des Hauptkolbens 1001,
- die Kraft F Magnet von dem Kraftsteller 101,
- der Federkraft der Federeinrichtung 102.

Die auf den Hauptkolben 1001 wirkende Öffnungskraft wird von dem auf die Hauptsteuerfläche 1007 des Hauptkolbens 1001 wirkenden Druck erzeugt.

Es ist ferner vorgesehen, dass die Hauptsteuerfläche 1007 des Hauptkolbens 1001 größer als die Vorsteuerfläche 1004 des Hauptkolbens 1001 ist.

Nachfolgend wird auf Fig. 5 Bezug genommen.

Der Kolben 2 wird in die zweite Betätigungsrichtung R2 innerhalb des Zylinderrohres 10 bewegt. Fluid aus dem zweiten Arbeitsraum 21 strömt durch das geöffnete Druckbegrenzungsventil in den ersten Arbeitsraum 11, insbesondere von dem zweiten Arbeitsraum 21 in den Kanal 109, in den Ringraum 104 und den Kanal 107 in den ersten Arbeitsraum 11. Der Weg des Fluids ist über den Pfeil P2 angedeutet.

Dabei herrscht während der Kolbenverschiebung im zweiten Arbeitsraum 21 ein höherer Druck, als in dem ersten Arbeitsraum 11. Durch die Bezugszeichen p_{hoch} bzw. p_{nieder} soll dieser Druckunterschied angedeutet werden, wobei unterschiedliche Drücke auch noch in anderen oben bereits genannten Räumen während dieser Bewegung herrschen bzw. Fluid aus dem zweiten Arbeitsraum 21 ebenfalls in weitere Räume fließt.

Es strömt Fluid aus dem zweiten Arbeitsraum 21 in den Ringraum 104, insbesondere über den Kanal 109.

Von dem Ringraum 104 strömt Fluid in den Hauptsteuerraum 106.

Von dem Hauptsteuerraum 106 strömt Fluid in den ersten Arbeitsraum 11, insbesondere über den Kanal 107.

Von dem Ringraum 104 strömt Fluid in den Hilfskolbenraum 1010.

Es stellt sich ein hoher Druck in dem Hilfskolbenraum 1010 ein.

Es stellt sich ein niedriger Druck in dem Raum 105 und dem Vorsteuerraum 103 ein.

Die auf den Hauptkolben 1001 wirkende Schließkraft setzt sich in diesem Fall insbesondere zusammen aus dem
- Druck auf die umlaufende Kante 1005,
- die Kraft F_{Magnet} von dem Kraftsteller 101,
- der Federkraft der Federeinrichtung 102.

Die auf den Hauptkolben 1001 wirkende Öffnungskraft entsteht insbesondere durch die mit Druck beaufschlagte hauptkolbenseitige Fläche 1013 des Hauptkolbens im Hilfskolbenraum 1010, wobei sich der Hilfskolben 1009 bzw. dessen Stempel 1011 insbesondere auf dem Hauptsteuerraumboden 1008 abstützt.

Es ist ferner vorgesehen, dass die Hilfskolbenfläche 1012 größer als die Kantenfläche 1005 des Hauptkolbens 1001 ist.

Zusammenfassend kann aus der vorausgegangenen Beschreibung der ersten Betätigungsrichtung R1 und zweiten Betätigungsrichtung R2 ein vorteilhaftes Verfahren zum Betrieb eines Druckbegrenzungsventils in einem Schwingungsdämpfer skizziert werden.

In einer ersten Betätigungsrichtung R1 des Kolbens 2 wird das erste Öffnungskraftmittel mit Fluid aus dem ersten Arbeitsraum 11 beaufschlagt, so dass der Hauptkolben 1001 in eine Öffnungsposition verschoben wird und Fluid von dem ersten Arbeitsraum 11 in den zweiten Arbeitsraum 21 strömt.

Insbesondere ist ersichtlich, dass das Fluid bei der ersten Betätigungsrichtung in den Hauptsteuerraum 106 einströmt und den Hauptkolben 1001 von dem Hauptsteuerraumboden 1008 wegdrückt, insbesondere in eine geöffnete Position des Hauptkolbens.

In einer zweiten Betätigungsrichtung R2 des Kolbens 2 wird das zweite Öffnungskraftmittel mit Fluid aus dem zweiten Arbeitsraum beaufschlagt, so dass der Hauptkolben 1001 in eine Öffnungsposition verschoben wird und Fluid von dem zweiten Arbeitsraum 21 in den ersten Arbeitsraum 11 strömt.

Insbesondere ist ersichtlich, dass das Fluid bei der zweiten Betätigungsrichtung R2 in den Hilfskolbenraum 1010 einströmt und Hauptkolben 1001 von dem Hilfskolben 1009 wegdrückt, insbesondere durch den Druck auf die hauptkolbenseitige Fläche 1013, insbesondere in eine geöffnete Position des Hauptkolbens 1001.

Es ist insbesondere ersichtlich, dass das Fluid sowohl bei der ersten Betätigungsrichtung R1 des Kolbens 2, als auch bei der zweiten Betätigungsrichtung R2 des Kolbens den Hauptsteuerraum 106 passiert. Mit anderen Worten, kann ein und derselbe Hauptkolben 1001 für beide Betätigungsrichtungen R1 und R2 das Druckbegrenzungsventil öffnen bzw. schließen.

Insgesamt muss der Schwingungsdämpfer nicht mit einem Vorsteuerventil ausgestattet werden. Stattdessen ist der erfindungsgemäße Schwingungsdämpfer mit einem direktgesteuerten Druckbegrenzungsventil, insbesondere direktgesteuertem Hauptkolben, ausgestattet. Auch kann auf Rückschlagventile verzichtet werden, so dass sich insbesondere ein verbessertes akustisches Verhalten des Schwingungsdämpfers während des Betriebes ergibt.

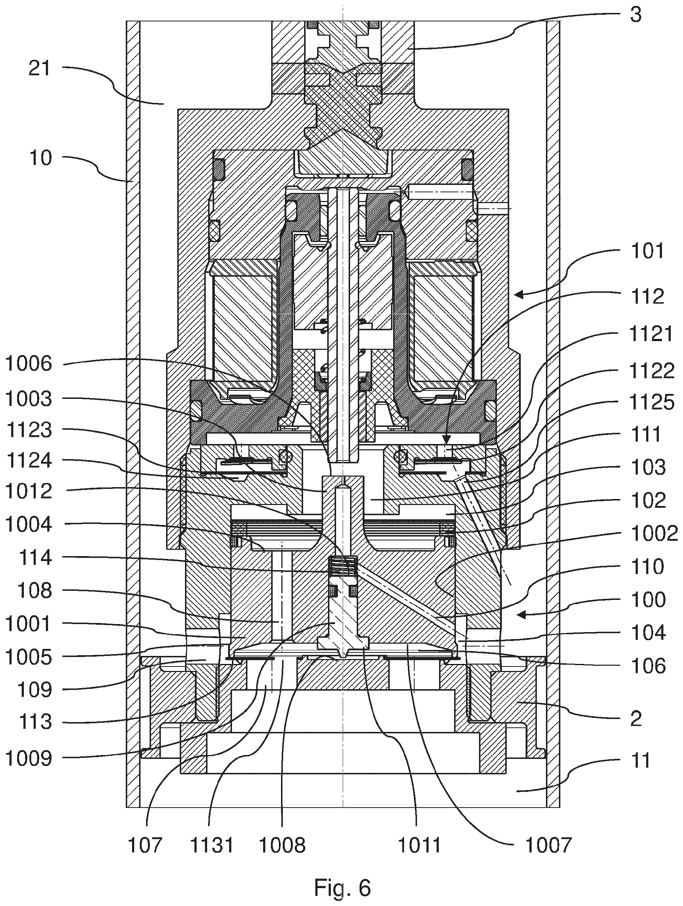

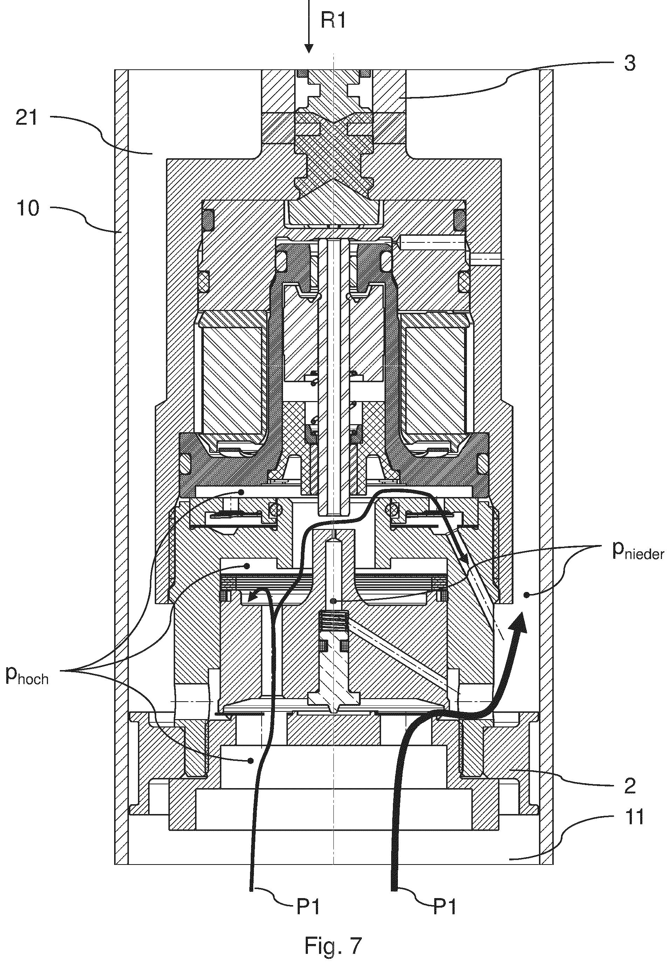

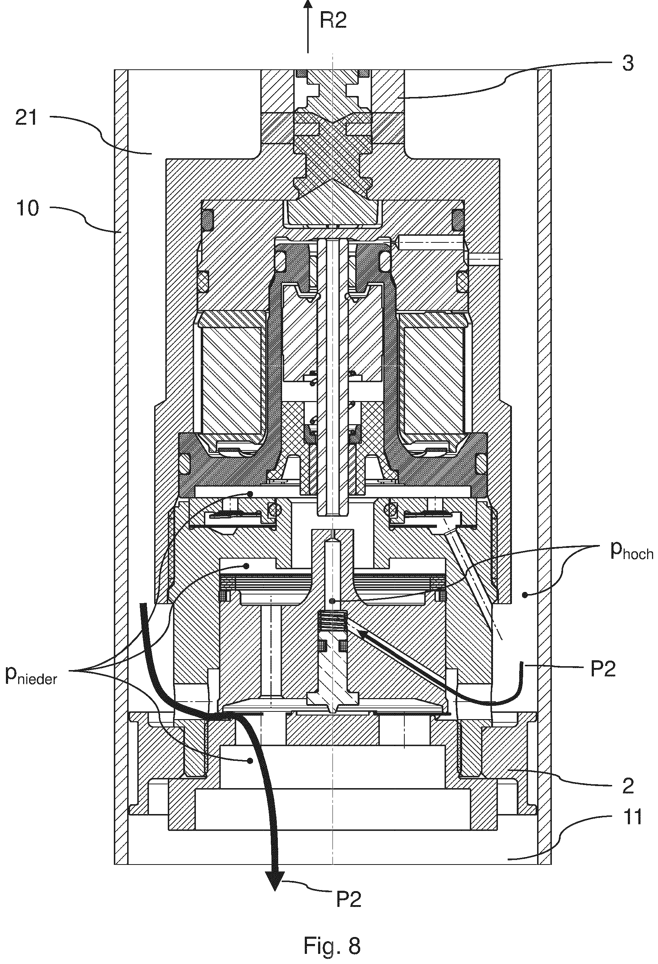

Nachfolgend wird insbesondere auf die Fig. 6 bis 8 Bezug genommen. Hier ist eine weitere Ausführungsform eines erfindungsgemäßen Schwingungsdämpfers in einer geschnittenen Ansicht dargestellt. Grundsätzlich kann auf die bereits zu der Ausführungsform des erfindungsgemäßen Schwingungsdämpfers gemäß den Fig. 2 bis 5 gemachten Ausführungen verwiesen werden. Zusätzlich ist der Schwingungsdämpfer mit einem Bypass 112 für die erste Betätigungsrichtung R1, insbesondere für die Druckstufe, einer Ventilscheibe 113, die auch als akustisches Dämpfungselement angesprochen werden kann, und/oder einem Vorspannelement 114 für den Hilfskolben 1009 ausgestattet.

Der Bypass 112 umfasst im Wesentlichen einen Einlass 1121, ein Rückschlagventil 1122, eine Bypassscheibe 1123, eine Ringnut 1124, sowie einen Auslass 1125.

Der Einlass 1121 ist fluidisch mit dem Kanal 111 verbunden. Der Auslass 1125 ist fluidisch mit dem zweiten Arbeitsraum 21 verbunden. Das Rückschlagventil 1122 ist derart ausgestaltet, dass das Ventil in Strömungsrichtung vom Einlass 1121 zum Auslass 1125 öffnet, jedoch in entgegengesetzte Strömungsrichtung, also vom Auslass 1125 zum Einlass 1121, schließt.

Der Auslass 1125 ist fluidisch mit der Ringnut 1124 verbunden, wobei die Ringnut 1124 abschnittsweise von der Bypassscheibe 1123 bedeckt ist. Die Bypasscheibe 1123 weist vorbestimmte Öffnungen bzw. Bohrungen auf, über die sich der Fluidstrom einstellen lässt, dergestalt, dass sie einen vorbestimmten Strömungsquerschnitt definieren. Auf diese Weise lässt sich der Fluidstrom vom Einlass, über das Rückschlagventil, durch die Bypassscheibe, in die Ringnut und von da aus in den Auslass einstellen.

Die Ventilscheibe 113, insbesondere ein weiches Element, ist unterhalb des Hauptkolbens 1001 angebracht. Beim Auftreffen des Hauptkolbens 1001 auf den Hauptsteuerraumboden 1008 wird das Geräusch entsprechend akustisch gedämpft.

Das Vorspannelement 114 für den Hilfskolben 1009 ist vorzugsweise als Schraubenfeder ausgestaltet. Das Vorspannelement 114 ist in dem Hilfskolbenraum 1010 aufgenommen und drückt den Hilfskolben 1009 in Richtung des Hauptsteuerraumbodens 1008. Damit wird eine gewisse Vorspannkraft auf den Hilfskolben 1009 ausgeübt, dergestalt, dass der Hilfskolben 1009 aus dem Hilfskolbenraum 1010 herausgedrückt wird und eine Öffnungskraft auf den Hauptkolben 1001 ausgeübt wird. Es kann so eine gewisse Voröffnung des Hauptkolbens 1001 erreicht werden.

## Patentansprüche

1. Regelbarer Schwingungsdämpfer, insbesondere für ein Fahrzeugfahrwerk, umfassend ein mit Fluid befülltes Zylinderrohr (10) mit einem Kolben (2), der innerhalb des Zylinderrohres (10) axial in eine erste Betätigungsrichtung (R1) und eine entgegengesetzte zweite Betätigungsrichtung (R2) bewegbar ist und der das Zylinderrohr (10) in einen ersten Arbeitsraum (11) und einen zweiten Arbeitsraum (21) unterteilt, wobei ein von dem Fluid durchströmbares Druckbegrenzungsventil zur Dämpfung der Kolbenbewegung vorgesehen ist, wobei
- das Druckbegrenzungsventil (100) einen verschiebbar in einem Hauptkolbenraum (1002) aufgenommenen Hauptkolben (1001) zum Öffnen oder Verschließen des Druckbegrenzungsventils (100) umfasst, wobei
- das Druckbegrenzungsventil (100) mit einem ersten Öffnungskraftmittel ausgestattet ist, welches dazu eingerichtet ist eine Öffnungskraft auf den Hauptkolben (1001) in der ersten Betätigungsrichtung des Kolbens (2) auszuüben, **dadurch gekennzeichnet, dass**
- das Druckbegrenzungsventil (100) mit einem zweiten Öffnungskraftmittel ausgestattet ist, welches dazu eingerichtet ist eine Öffnungskraft auf den Hauptkolben (1001) in der zweiten Betätigungsrichtung des Kolbens auszuüben, wobei
- das zweite Öffnungskraftmittel einen verschiebbar in dem Hauptkolben (1001) aufgenommenen Hilfskolben (1009) umfasst.

2. Schwingungsdämpfer nach Anspruch 1, **dadurch gekennzeichnet, dass** der Hauptkolben (1001) den Hauptkolbenraum (1002) in einen Hauptsteuerraum (106) und einen Vorsteuerraum (103) teilt, wobei das erste Öffnungskraftmittel den Hauptsteuerraum (106) umfasst, der in fluidischer Verbindung mit dem ersten Arbeitsraum (11) steht.

3. Schwingungsdämpfer nach mindestens einem der vorhergehenden Ansprüche, **dadurch gekennzeichnet, dass** das zweite Öffnungskraftmittel einen Hilfskolbenraum (1010) in dem Hauptkolben (1001) umfasst, in dem der Hilfskolben (1009) verschiebbar aufgenommen ist, wobei der Hilfskolbenraum eine hilfskolbenseitige Fläche (1013) des Hilfskolbens (1009) und eine hauptkolbenseitige Fläche (1013) des Hauptkolbens (1001) umfasst, wobei der Hilfskolbenraum (1010) in fluidischer Verbindung mit dem zweiten Arbeitsraum (21) steht.

4. Schwingungsdämpfer nach mindestens einem der vorhergehenden Ansprüche, **dadurch gekennzeichnet, dass** der Hauptsteuerraum (106) von einem Ringraum (104) umgeben ist, wobei der Ringraum (104) fluidisch mit dem zweiten Arbeitsraum (21) und dem Hilfskolbenraum (1010) verbunden ist, wobei der fluidische Durchlass zwischen Hauptsteuerraum (106) und Ringraum (104) durch Verschieben des Hauptkolbens (1001) zum Öffnen oder Verschließen des Druckbegrenzungsventils (100) wahlweise geöffnet oder geschlossen werden kann.

5. Schwingungsdämpfer nach mindestens einem der vorhergehenden Ansprüche, **dadurch gekennzeichnet, dass** das Druckbegrenzungsventil (100) mit mindestens einem Schließkraftmittel ausgestattet ist, welches dazu eingerichtet ist, eine Schließkraft zum Schließen des Druckbegrenzungsventils (100) auf den Hauptkolben (1001) auszuüben.

6. Schwingungsdämpfer nach mindestens einem der vorhergehenden Ansprüche, **dadurch gekennzeichnet, dass** ein Schließkraftmittel einen Kraftsteller (101), insbesondere magnetischen Aktuator, und/oder eine Federeinrichtung (102) umfasst, der bzw. die dazu eingerichtet ist bzw. sind, den Hauptkolben (1001) in Richtung einer geschlossenen Stellung zu drücken.

7. Schwingungsdämpfer nach mindestens einem der vorhergehenden Ansprüche, **dadurch gekennzeichnet, dass** ein Schließkraftmittel den Vorsteuerraum (103) umfasst, wobei der Vorsteuerraum (103) fluidisch mit dem Hauptsteuerraum (106) verbunden ist.

8. Schwingungsdämpfer nach mindestens einem der vorhergehenden Ansprüche, **dadurch gekennzeichnet, dass** ein Schließkraftmittel eine umlaufende Kante (1005) des Hauptkolbens (1001) umfasst, wobei die umlaufende Kante (1005) in den Ringraum (104) hineinragt.

9. Schwingungsdämpfer nach mindestens einem der vorhergehenden Ansprüche, **dadurch gekennzeichnet, dass** der Hauptkolben (1001) eine dem Hauptsteuerraum (106) zugewandte Hauptsteuerfläche (1007), sowie eine dem Vorsteuerraum (103) zugewandte Vorsteuerfläche (1004) umfasst.

10. Schwingungsdämpfer nach mindestens einem der vorhergehenden Ansprüche, **dadurch gekennzeichnet, dass** die Hauptsteuerfläche (1007) größer als die Vorsteuerfläche (1004) ist.

11. Schwingungsdämpfer nach mindestens einem der vorhergehenden Ansprüche, **dadurch gekennzeichnet, dass** die hauptkolbenseitige Fläche (1013) größer als die Kantenfläche (1005) des Hauptkolbens (1001) ist.

12. Verfahren zum Betrieb eines Druckbegrenzungsventils in einem Schwingungsdämpfer gemäß mindestens einem der vorhergehenden Ansprüche, **gekennzeichnet durch** folgende Verfahrensschritte:
- In der ersten Betätigungsrichtung (R1) des Kolbens (2) wird das erste Öffnungskraftmittel mit Fluid aus dem ersten Arbeitsraum (11) beaufschlagt, so dass der Hauptkolben (1001) in eine Öffnungsposition verschoben wird und Fluid von dem ersten Arbeitsraum (11) in den zweiten Arbeitsraum (21) strömt;
- In der zweiten Betätigungsrichtung (R2) des Kolbens (2) wird das zweite Öffnungskraftmittel mit Fluid aus dem zweiten Arbeitsraum (21) beaufschlagt, so dass der Hauptkolben (1001) in eine Öffnungsposition verschoben wird und Fluid von dem zweiten Arbeitsraum (21) in den ersten Arbeitsraum (11) strömt.

13. Verfahren nach Anspruch 12, **dadurch gekennzeichnet, dass** das Fluid sowohl bei der ersten Betätigungsrichtung (R1) des Kolbens (2), als auch bei der zweiten Betätigungsrichtung (R2) des Kolbens (2) den Hauptsteuerraum (106) passiert.

14. Verfahren nach mindestens einem der vorhergehenden Ansprüche, **dadurch gekennzeichnet, dass** das Fluid bei der ersten Betätigungsrichtung (R1) in den Hauptsteuerraum (106) einströmt und den Hauptkolben (1001) von dem Hauptsteuerraumboden (1008) wegdrückt, insbesondere in eine geöffnete Position des Hauptkolbens (1001).

15. Verfahren nach mindestens einem der vorhergehenden Ansprüche, **dadurch gekennzeichnet, dass** das Fluid bei der zweiten Betätigungsrichtung (R2) in den Hilfskolbenraum einströmt und den Hauptkolben (1001) durch Druck auf die hauptkolbenseitige Fläche (1013) von dem Hilfskolben (1009) wegdrückt, insbesondere in eine geöffnete Position des Hauptkolbens (1001).

## Claims

1. Adjustable vibration damper, in particular for a vehicle chassis, comprising a cylinder tube (10) filled with fluid and having a piston (2) which is movable axially within the cylinder tube (10) in a first direction of actuation (R1) and an opposite second direction of actuation (R2) and which divides the cylinder tube (10) into a first working chamber (11) and a second working chamber (21), wherein a pressure relief valve through which the fluid can flow is provided for damping the piston movement, wherein
- the pressure relief valve (100) comprises a main piston (1001) which is received in a main piston chamber (1002) in a displaceable manner for opening or closing the pressure relief valve (100), wherein
- the pressure relief valve (100) is equipped with a first opening force means which is designed to exert an opening force on the main piston (1001) in the first operating direction of the piston (2), **characterised in that**
- the pressure relief valve (100) is equipped with a second opening force means which is designed to exert an opening force on the main piston (1001) in the second operating direction of the piston, wherein
- the second opening force means comprises an auxiliary piston (1009) slidably received in the main piston (1001).

2. Vibration damper according to claim 1, **characterised in that** the main piston (1001) divides the main piston chamber (1002) into a main control chamber (106) and a pilot chamber (103), wherein the first opening force means comprises the main control chamber (106), which is in fluid communication with the first working chamber (11).

3. Vibration damper according to at least one of the preceding claims, **characterised in that** the second opening force means comprises an auxiliary piston chamber (1010) in the main piston (1001), in which the auxiliary piston (1009) is slidably received, wherein the auxiliary piston chamber comprises an auxiliary piston side surface (1013) of the auxiliary piston (1009) and a main piston-side surface (1013) of the main piston (1001), wherein the auxiliary piston chamber (1010) is in fluid communication with the second working chamber (21).

4. Vibration damper according to at least one of the preceding claims, **characterised in that** the main control chamber (106) is surrounded by an annular chamber (104), wherein the annular chamber (104) is fluidically connected to the second working chamber (21) and the auxiliary piston chamber (1010), wherein the fluidic passage between the main control chamber (106) and the annular chamber (104) can be selectively opened or closed by moving the main piston (1001) to open or close the pressure relief valve (100).

5. Vibration damper according to at least one of the preceding claims, **characterised in that** the pressure relief valve (100) is equipped with at least one closing force means which is designed to exert a closing force on the main piston (1001) in order to close the pressure relief valve (100).

6. Vibration damper according to at least one of the preceding claims, **characterised in that** a closing force means comprises a force adjuster (101), in particular a magnetic actuator, and/or a spring device (102), which is or are designed to press the main piston (1001) in the direction of a closed position.

7. Vibration damper according to at least one of the preceding claims, **characterised in that** a closing force means comprises the pilot control chamber (103), wherein the pilot control chamber (103) is fluidically connected to the main control chamber (106).

8. Vibration damper according to at least one of the preceding claims, **characterised in that** a closing force means comprises a circumferential edge (1005) of the main piston (1001), wherein the circumferential edge (1005) protrudes into the annular space (104).

9. Vibration damper according to at least one of the preceding claims, **characterised in that** the main piston (1001) comprises a main control surface (1007) facing the main control chamber (106) and a pilot control surface (1004) facing the pilot control chamber (103).

10. Vibration damper according to at least one of the preceding claims, **characterised in that** the main control surface (1007) is larger than the pilot control surface (1004).

11. Vibration damper according to at least one of the preceding claims, **characterised in that** the main piston side surface (1013) is larger than the edge surface (1005) of the main piston (1001).

12. Method for operating a pressure relief valve in a vibration damper according to at least one of the preceding claims, **characterised by** the following method steps:
- In the first actuating direction (R1) of the piston (2), the first opening force means is acted upon by fluid from the first working chamber (11), so that the main piston (1001) is moved into an opening position and fluid flows from the first working chamber (11) into the second working chamber (21);
- In the second direction of actuation (R2) of the piston (2), the second opening force means is acted upon by fluid from the second working chamber (21), so that the main piston (1001) is moved into an opening position and fluid flows from the second working chamber (21) into the first working chamber (11).

13. Method according to claim 12, **characterised in that** the fluid passes through the main control chamber (106) both in the first direction of operation (R1) of the piston (2) and in the second direction of operation (R2) of the piston (2).

14. Method according to at least one of the preceding claims, **characterised in that** the fluid flows into the main control chamber (106) in the first direction of actuation (R1) and pushes the main piston (1001) away from the main control chamber floor (1008), in particular into an open position of the main piston (1001).

15. Method according to at least one of the preceding claims, **characterised in that**, in the second direction of actuation (R2), the fluid flows into the auxiliary piston chamber and pushes the main piston (1001) away from the auxiliary piston (1009) by exerting pressure on the surface (1013) on the main piston side, in particular into an open position of the main piston (1001).

## Revendications

1. Amortisseur de vibrations réglable, en particulier pour un châssis de véhicule, comprenant un tube cylindrique (10) rempli de fluide avec un piston (2), qui est mobile axialement à l'intérieur du tube cylindrique (10) dans une première direction d'actionnement (R1) et dans une deuxième direction d'actionnement opposée (R2) et qui divise le tube cylindrique (10) en une première chambre de travail (11) et une deuxième chambre de travail (21), une soupape de limitation de pression pouvant être traversée par le fluide étant prévue pour amortir le mouvement du piston,
- la soupape de limitation de pression (100) comprend un piston principal (1001) logé de manière coulissante dans une chambre de piston principale (1002) pour ouvrir ou fermer la soupape de limitation de pression (100),
- la soupape de limitation de pression (100) est équipée d'un premier moyen de force d'ouverture qui est conçu pour exercer une force d'ouverture sur le piston principal (1001) dans la première direction d'actionnement du piston (2), **caractérisée en ce que**
- la soupape de limitation de pression (100) est équipée d'un deuxième moyen de force d'ouverture qui est conçu pour exercer une force d'ouverture sur le piston principal (1001) dans la deuxième direction d'actionnement du piston,
- le deuxième moyen de force d'ouverture comprend un piston auxiliaire (1009) logé de manière coulissante dans le piston principal (1001).

2. Amortisseur de vibrations selon la revendication 1, **caractérisé en ce que** le piston principal (1001) divise la chambre principale du piston (1002) en une chambre de commande principale (106) et une chambre de précommande (103), le premier moyen de force d'ouverture comprenant la chambre de commande principale (106) qui est en communication fluidique avec la première chambre de travail (11).

3. Amortisseur de vibrations selon au moins l'une des revendications précédentes, **caractérisé en ce que** le deuxième moyen de force d'ouverture comprend une chambre de piston auxiliaire (1010) dans le piston principal (1001), dans laquelle le piston auxiliaire (1009) est logé de manière coulissante, la chambre de piston auxiliaire comprenant une surface côté piston auxiliaire (1013) du piston auxiliaire (1009) et une surface côté piston principal (1013) du piston principal (1001), la chambre de piston auxiliaire (1010) étant en communication fluidique avec la deuxième chambre de travail (21).

4. Amortisseur de vibrations selon au moins l'une des revendications précédentes, **caractérisé en ce que** la chambre de commande principale (106) est entourée d'une chambre annulaire (104), la chambre annulaire (104) étant reliée de manière fluidique à la deuxième chambre de travail (21) et à la chambre du piston auxiliaire (1010), le passage fluidique entre la chambre de commande principale (106) et la chambre annulaire (104) peut être ouverte ou fermée au choix en déplaçant le piston principal (1001) pour ouvrir ou fermer la soupape de limitation de pression (100).

5. Amortisseur de vibrations selon au moins l'une des revendications précédentes, **caractérisé en ce que** la soupape de limitation de pression (100) est équipée d'au moins un moyen de force de fermeture qui est conçu pour exercer une force de fermeture sur le piston principal (1001) afin de fermer la soupape de limitation de pression (100).

6. Amortisseur de vibrations selon au moins l'une des revendications précédentes, **caractérisé en ce qu'**un moyen de force de fermeture comprend un actionneur (101), en particulier un actionneur magnétique, et/ou un dispositif à ressort (102), qui est ou sont conçus pour pousser le piston principal (1001) vers une position fermée.

7. Amortisseur de vibrations selon au moins l'une des revendications précédentes, **caractérisé en ce qu'**un moyen de force de fermeture comprend la chambre de pilotage (103), la chambre de pilotage (103) étant reliée de manière fluidique à la chambre de commande principale (106).

8. Amortisseur de vibrations selon au moins l'une des revendications précédentes, **caractérisé en ce qu'**un moyen de force de fermeture comprend un bord périphérique (1005) du piston principal (1001), le bord périphérique (1005) faisant saillie dans l'espace annulaire (104).

9. Amortisseur de vibrations selon au moins l'une des revendications précédentes, **caractérisé en ce que** le piston principal (1001) comprend une surface de commande principale (1007) tournée vers la chambre de commande principale (106) et une surface de commande pilote (1004) tournée vers la chambre de commande pilote (103).

10. Amortisseur de vibrations selon au moins l'une des revendications précédentes, **caractérisé en ce que** la surface de commande principale (1007) est plus grande que la surface de commande pilote (1004).

11. Amortisseur de vibrations selon au moins l'une des revendications précédentes, **caractérisé en ce que** la surface côté piston principal (1013) est plus grande que la surface d'arête (1005) du piston principal (1001).

12. Procédé pour faire fonctionner une soupape de limitation de pression dans un amortisseur de vibrations selon au moins l'une des revendications précédentes, **caractérisé par** les étapes suivantes :
- Dans le premier sens d'actionnement (R1) du piston (2), le premier moyen de force d'ouverture est alimenté en fluide provenant de la première chambre de travail (11), de sorte que le piston principal (1001) est déplacé dans une position d'ouverture et que le fluide s'écoule de la première chambre de travail (11) vers la deuxième chambre de travail (21) ;
- Dans la deuxième direction d'actionnement (R2) du piston (2), le deuxième moyen de force d'ouverture est alimenté en fluide provenant de la deuxième chambre de travail (21), de sorte que le piston principal (1001) est déplacé dans une position d'ouverture et que le fluide s'écoule de la deuxième chambre de travail (21) vers la première chambre de travail (11).

13. Procédé selon la revendication 12, **caractérisé en ce que** le fluide passe par la chambre de commande principale (106) aussi bien dans la première direction d'actionnement (R1) du piston (2) que dans la deuxième direction d'actionnement (R2) du piston (2).

14. Procédé selon au moins l'une des revendications précédentes, **caractérisé en ce que** le fluide s'écoule dans la chambre de commande principale (106) dans la première direction d'actionnement (R1) et repousse le piston principal (1001) du fond de la chambre de commande principale (1008), en particulier dans une position ouverte du piston principal (1001).

15. Procédé selon au moins l'une des revendications précédentes, **caractérisé en ce que**, dans le deuxième sens d'actionnement (R2), le fluide s'écoule dans la chambre du piston auxiliaire et éloigne le piston principal (1001) du piston auxiliaire (1009) en exerçant une pression sur la surface côté piston principal (1013), en particulier dans une position ouverte du piston principal (1001).
